# EUROPEAN PATENT SPECIFICATION

(11) **EP 3 778 656 B1**
(45) Date of publication and mention of the grant of the patent: **11.11.2026**
(21) Application number: 19778012.5
(22) Date of filing: 22.03.2019
(51) Int. Cl.: C08F 2/01, C08F 4/48, C08F 2/06, C08F 112/08, B01J 14/00, B01J 19/24

(54) **METHOD FOR PRODUCING POLYMER AND FLOW-TYPE REACTION SYSTEM FOR PRODUCING POLYMER**
VERFAHREN ZUR HERSTELLUNG EINES POLYMERS UND FLIESSREAKTIONSSYSTEM ZUR HERSTELLUNG EINES POLYMERS
PROCÉDÉ DE PRODUCTION D'UN POLYMÈRE, ET SYSTÈME DE RÉACTION DE TYPE À ÉCOULEMENT POUR PRODUIRE LE POLYMÈRE

(30) Priority: 29.03.2018 JP 2018064745
(43) Date of publication of application: 17.02.2021
(73) Proprietor: FUJIFILM Corporation, Tokyo 106-8620 (JP)
(72) Inventor: WADA, Kenji, Ashigarakami-gun, Kanagawa 258-8577 (JP); HARADA, Kei, Ashigarakami-gun, Kanagawa 258-8577 (JP)
(74) Representative: Hoffmann Eitle
(86) International application number: PCT/JP2019/011991
(87) International publication number: WO 2019/188749

(56) References cited:
- EP-A1- 3 085 712
- WO-A1-02/02651
- WO-A1-2017/135398
- JP-A- 2009 067 999
- JP-A- 2014 177 538
- JP-A- 2016 183 217
- JP-A- 2017 066 276

## Description

### BACKGROUND OF THE INVENTION

### 1. Field of the Invention

The present invention relates to a method for manufacturing a polymer.

### 2. Description of the Related Art

Living anionic polymerization is known as a method that can realize a precise polymerization reaction in synthesizing polymers having special structures such as a monodisperse polymer, a block copolymer, a functional group-terminated polymer, a multibranched polymer, and a cyclic polymer.

Living anionic polymerization is usually performed by a batch method. However, in a case where the living anionic polymerization is performed by a batch method, the heat generated during the polymerization needs to be removed so as to inhibit side reactions such as a chain transfer reaction and a termination reaction, and accordingly, the polymerization reaction is performed at an extremely low temperature. For example, the polymerization reaction is performed by mixing an anionic polymerizable monomer with an anionic polymerization initiator in a state of cooling the monomer and the initiator at a temperature equal to or lower than -78°C. Therefore, for performing the living anionic polymerization by the batch method, cryogenic cooling facilities are required, and such a polymerization method is not suited for mass production.

In addition, the living anionic polymerization by the batch method is carried out with mechanical stirring. Therefore, the monomer or the polymerization initiator tends to be unevenly localized in the reaction system. Accordingly, in the living anionic polymerization by the batch method, there is a limit to the improvement of e.g. the dispersity of the obtained polymer and the monomer conversion rate.

In addition, there is also a method known to continuously obtain a polymer having a narrow molecular weight distribution by means of living anionic polymerization by using a flow-type reaction device such as a microreactor. For example, JP-A-2016-183217 describes anionic polymerization of an α-alkylstyrene monomer by a flow-type reaction, in which the monomer is polymerized by a method including a step of first adjusting a raw material solution obtained by mixing the monomer with an initiator to a certain high temperature so as to activate the monomer and a step of then allowing the raw material solution to flow in a flow path and at the same time rapidly cooling the solution to a temperature of a specific range in which polymerization can occur. JP-A-2016-183217 describes that in a case where the above method is used, a high-molecular-weight polymer having a more monodisperse molecular weight distribution is obtained.

### SUMMARY OF THE INVENTION

The polymerization method described in JP-A-2016-183217 is extremely effective for increasing the molecular weight of the obtained polymer and for causing the obtained polymer to have a monodisperse molecular weight distribution. However, as a result of the examinations performed by the inventors of the present invention from the viewpoint of industrial commercialization of the manufacturing of polymers, it has been found that the polymerization method described in JP-A-2016-183217 sometimes results in a low monomer conversion rate and is still unsatisfactory from the viewpoint of e.g. the manufacturing efficiency and reproducibility of polymers.

Therefore, an object of the present invention is to provide a method for manufacturing a polymer by living anionic polymerization using a flow-type reaction, which makes it possible to obtain a polymer having a predetermined high molecular weight and a highly monodisperse molecular weight distribution at an excellent monomer conversion rate. Another object of the present invention is to provide a flow-type reaction system suitable for performing the manufacturing method.

The present inventors performed intensive examinations regarding a technique for obtaining a polymer, which has a certain high molecular weight and a highly monodisperse molecular weight distribution, at a high efficiency without wasting raw materials by living anionic polymerization using a flow-type reaction. As a result, it has been found that even though the polymerization reaction is applied to the flow-type reaction system, there is a limitation in obtaining a polymer having a certain high molecular weight with sufficiently increasing the monomer conversion rate. In order to determine the cause of the above problem, the present inventors repeated examinations. As a result, the inventors came up with an idea that one of the causes is that the higher the molecular weight of the polymer is during the polymerization reaction, the further the motion of the growth terminal is restricted; or the increase in the molecular weight leads to the increase in the viscosity of the reaction solution. That is, the inventors considered that the increase in viscosity resulting from the increase in the molecular weight of the polymer may reduce the Reynolds number and make the reaction solution substantially in a state of laminar flow under a special reaction condition called flow-type reaction, and thus the components in the reaction solution may be prevented from being uniformly mixed together, which may be one of the causes of reducing the monomer conversion rate.

As solutions to this problem, further raising e.g. the reaction temperature and increasing the reaction time are considered. However, in a case where the living anionic polymerization is performed at a high temperature, a side reaction such as doubling of molecular weight occurs. Furthermore, in a case where the diameter and length of the reaction tube are increased while performing the reaction at a low temperature so as to improve the mixing properties, the size of the device increases, and it is difficult to design the facilities.

Under these circumstances, the present inventors further repeated examinations. As a result, the inventors have found that in order to solve the above problem, it is effective to use a method of incorporating a mixing step performed using a static mixer into the living anionic polymerization using the flow-type reaction at a point in time when the polymerization reaction in the reaction flow path is at a specific stage.

Based on this finding, examinations were further repeated, and as a result, the present invention has accomplished.

That is, the objects of the present invention have achieved by a method for manufacturing a polymer in which anionic polymerization reaction is performed by a flow-type reaction, the method comprising:
- introducing a liquid A containing an anionic polymerizable monomer, a liquid B containing an anionic polymerization initiator, and a polymerization terminator into different flow paths;
- allowing the liquids to flow in the flow paths;
- allowing the liquids A and B to join together; subjecting the anionic polymerizable monomer to anionic polymerization while the liquids having joined together are flowing to downstream in a reaction flow path;
- allowing a solution, which is obtained by the polymerization reaction and flows in the reaction flow path, and the polymerization terminator to join together so as to terminate the polymerization reaction and to obtain a polymer having a number-average molecular weight of 5,000-200,000,
wherein
- a static mixer is disposed in the reaction flow path, and a polymer having a number-average molecular weight ≥ 2,000 is introduced into an inlet port of the static mixer,
- the temperature of the liquids A and B is set to 0-40°C, and the temperature of the polymerization reaction solution obtained by joining of the liquids A and B flowing in the reaction flow path is set to -80°C to -5°C, and
- the ratio of the flow rate A at which the liquid A is introduced and the flow rate B at which the liquid B [flow rate A]/[flow rate B] is set to (10/1)-(1.3/1).

Preferred embodiments of the invention are as defined in the appended dependent claims and/or in the following detailed description.

Herein, "compound (including a polymer)" means a compound, a salt thereof, and an ion thereof. Furthermore, as long as the intended effect is brought about, "compound" also means a compound obtained by changing a portion of the structure of "compound".

Herein, a range of numerical values described using "to" means a range including the numerical values listed before and after "to" as a lower limit and an upper limit.

Herein, in a case where the size of inner cross section of e.g. a tube (equivalent diameter) of a flow path, a joining portion, or a mixer is described, this does not include the size of a connection portion of flow paths, a connection portion of a flow path and a joining portion, and a connection portion of a flow path and a mixer. That is, the size of each of the above connection portions is appropriately adjusted using e.g. a connecting tube such that a fluid flows in the connection portion from upstream to downstream. For example, assuming that there is a tube a having an equivalent diameter of the inner cross section of 1 mm, and the tube a is connected to a static mixer having an equivalent diameter of the inner cross section of the tube of 5 mm, an equivalent diameter of an inner cross section of a tube of the connection portion of the tube a and the static mixer is larger than 1 mm. However, this embodiment also included in the embodiments of the tube a having an equivalent diameter of 1 mm.

According to the manufacturing method of the present invention (also referred to as "the present method" hereinafter), it is possible to obtain a polymer, which has a high molecular weight equal to or greater than a certain value and a highly monodisperse molecular weight distribution, at an excellent monomer conversion rate. Furthermore, in a case where the manufacturing method is performed using the flow-type reaction system described herein, it is possible to obtain a polymer, which has a high molecular weight of at least a certain value and a highly monodisperse molecular weight distribution, at an excellent monomer conversion rate.

### BRIEF DESCRIPTION OF THE DRAWINGS

Fig. 1 is a view for schematically illustrating an embodiment of a flow-type reaction system used for present invention.
Fig. 2 is a view for schematically illustrating another embodiment of a flow-type reaction system used for the present invention.

### DESCRIPTION OF THE PREFERRED EMBODIMENTS

### [Flow-type reaction system]

An embodiment of a flow-type reaction system used in the present method will be described using drawings.

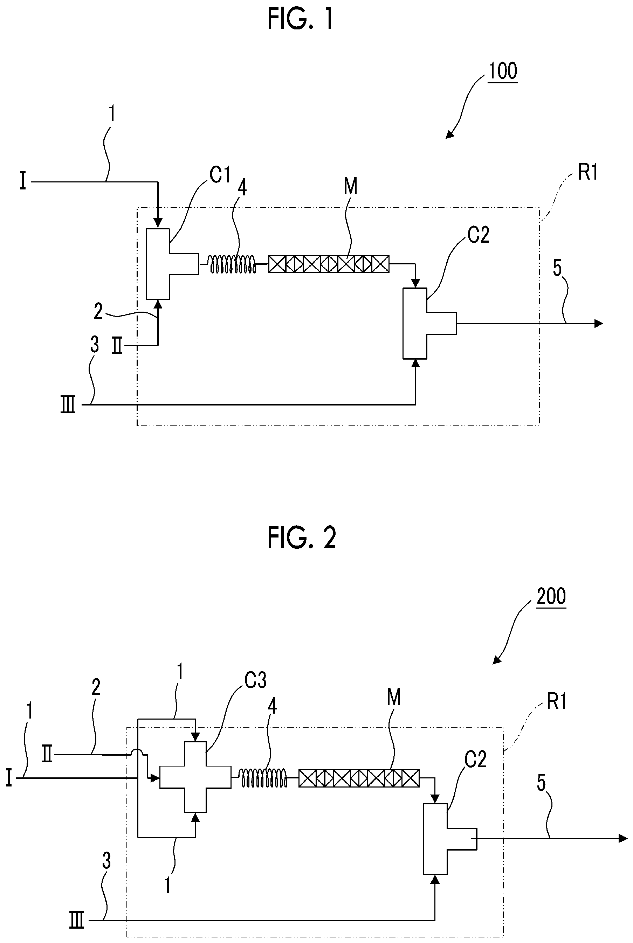

Fig. 1 is a schematic view showing an example of the flow-type reaction system used in the present method. A flow-type reaction system (100) shown in Fig. 1 comprises an anionic polymerizable monomer supply flow path (1) comprising an inlet port (I) for introducing a liquid (hereinafter, also referred to as "liquid A") containing an anionic polymerizable monomer, an anionic polymerization initiator supply flow path (2) comprising an inlet port (II) for introducing a liquid (hereinafter, also referred to as "liquid B") containing an anionic polymerization initiator, a polymerization terminator supply flow path (3) comprising an inlet port (III) for introducing a polymerization terminator, a joining portion (C1) where the anionic polymerizable monomer supply flow path (1) and the anionic polymerization initiator supply flow path (2) join together, a reaction tube (4) connected to the end of the downstream side of the joining portion (C1), a joining portion (C2) where the reaction tube (4) and the polymerization terminator supply flow path (3) join together, and a pipe line (5) connected to the end of the downstream side of the joining portion (C2). A static mixer (M), which will be described later, is incorporated into the flow-type reaction system at a specific position of the reaction tube (4).

In the embodiment shown in Fig. 1, at least the joining portion (C1), a region between the joining portion (C1) and the joining portion (C2), the joining portion (C2), and a portion of the pipe line (5) connected to the joining portion (C2) are arranged in a constant-temperature tank (R1). During an anionic polymerization reaction and a polymerization termination reaction, it is preferable to control the temperature such that the liquid temperature becomes -100°C to 40°C (preferably -80°C to30°C, and more preferably -50°C to 20°C).

Usually, a liquid feeding pump (not shown in the drawing) such as a syringe pump is connected to each of the inlet ports (I), (II), and (III). By operating the pump, the liquid A, the liquid B, and the polymerization terminator can flow in each flow path.

In the flow-type reaction system (100) shown in Fig. 1, some or all of the anionic polymerizable monomer supply flow path (1), the anionic polymerization initiator supply flow path (2), the joining portion (C1), the reaction tube (4), the joining portion (C2), and the pipe line (5) may be provided with an individual constant-temperature tank so as to separately control the temperature of a liquid flowing through each of the flow paths, joining portions, and pipe line.

For example, the liquid temperature can be controlled such that the temperature of the liquid flowing in the anionic polymerizable monomer supply flow path (1) and the anionic polymerization initiator supply flow path (2) becomes 0-40°C (preferably 0-30°C, more preferably 5-30°C, and even more preferably 5-20°C) and the temperature of the liquid flowing in the reaction tube 4 becomes -80°C to -5°C (preferably -80°C to -10°C and more preferably -50°C to -10°C). In this case, it is preferable to control the liquid temperature such that the temperature of the liquid in the joining portion (C1) is the same as the temperature (0-40°C) of the liquid flowing in the anionic polymerizable monomer supply flow path (1) and the anionic polymerization initiator supply flow path (2) (the temperature is preferably 0-30°C, more preferably 5-30°C, and even more preferably 5-20°C). In a case where the liquid temperature is controlled as above, even for a monomer having a low polymerization rate, the polymerization reaction can be uniformly accelerated, and the molecular weight dispersity can be further reduced. The temperatures of the liquids flowing in the anionic polymerizable monomer supply flow path (1) and the anionic polymerization initiator supply flow path (2) may be the same as or different from each other, but are preferably the same as each other. Furthermore, in a case where the temperature of the liquid flowing in a certain flow path is adjusted to the temperature range described above (for example, -80°C to -5°C), the temperature of the liquid may be varied within the above temperature range (for example, -80°C to -5°C) while the liquid is flowing in the flow path.

The temperature can be controlled as above in the embodiment shown in Fig. 2 that will be described later. In this case, the joining portion (C1) is replaced with the joining portion (C3).

In the present specification, "upstream" and "downstream" are used for the direction along which a liquid flows. A side where a liquid is introduced (in Fig. 1, the side of the inlet ports (I), (II), and (III)) is upstream, and a side opposite to the upstream is downstream.

Each configuration of the embodiment shown in Fig. 1 will be more specifically described.

### <Anionic polymerizable monomer supply flow path (1)>

The anionic polymerizable monomer supply flow path (1) is a flow path for supplying the liquid A introduced from the inlet port (I) to the joining portion (C1). The equivalent diameter of the anionic polymerizable monomer supply flow path (1) is preferably 1-10 mm. In a case where the equivalent diameter of the anionic polymerizable monomer supply flow path (1) is equal to or greater than 1 mm, even though the flow rate is increased to some extent, it is possible to inhibit the internal pressure of the system from excessively increasing and to further increase the polymer productivity. In a case where the equivalent diameter of the anionic polymerizable monomer supply flow path (1) is equal to or smaller than 10 mm, the temperature of the liquid can be accurately controlled at a point in time when the liquid is introduced into the joining portion (C1). The equivalent diameter of the anionic polymerizable monomer supply flow path (1) is more preferably 1-8 mm, and even more preferably 1-6 mm.

"Equivalent diameter" is a term used in the field of mechanical engineering, and is also called equilibrium diameter. Assuming that there is a circular tube equivalent to a pipe line or a flow path having a given inner cross-sectional shape of the tube, the diameter of the inner cross-section of the equivalent circular tube is referred to as equivalent diameter. The equivalent diameter (deq) is defined as dep = 4A/p in which A represents an inner cross-sectional area of a pipe line and p represents a wetted perimeter (inner perimeter) of a pipe line. In a case where the above definition is applied to a circular tube, the equivalent diameter equals the diameter of the inner cross section of the circular tube. Based on the data regarding an equivalent circular tube, the equivalent diameter is used for estimating the fluidity or the heat transfer characteristics of the pipe line, and shows the spatial scale (representative length) of a phenomenon. For a square tube in which a represents one side of the inner cross section of the tube, the equivalent diameter dep = 4a²/4a = a; for an equilateral triangular tube in which a represents one side thereof, deq = a/3^{1/2}; and for a flow between parallel flat plates in which h represents a height of a flow path, deq = 2h (for example, see "Mechanical Engineering Dictionary", edited by The Japan Society of Mechanical Engineers, 1997, Maruzen Co., Ltd).

The length of the anionic polymerizable monomer supply flow path (1) is not particularly limited, and the anionic polymerizable monomer supply flow path (1) can be constituted, for example, with a tube having a length of 0.10-15 m (preferably 0.30-10 m).

The material of the tube is not particularly limited, and examples thereof include perfluoroalkoxyalkane (PFA), Teflon (registered trademark), an aromatic polyether ketone-based resin, stainless steel, copper or a copper alloy, nickel or a nickel alloy, titanium or a titanium alloy, quartz glass, and soda lime glass. From the viewpoint of flexibility and chemical resistance, as the material of the tube, PFA, Teflon (registered trademark), stainless steel, a nickel alloy, or titanium is preferable.

The flow rate at which the liquid A is introduced from the inlet port (I) is not particularly limited, and can be appropriately selected according to the purpose in consideration of e.g. the equivalent diameter of the flow path, the concentration of the liquid B, and the flow rate of the liquid B introduced. For example, the flow rate is preferably 1 to 4,000 mL/min, more preferably 5 to 3,000 mL/min, and even more preferably 50 to 3,000 mL/min. In a case where the flow rate of the liquid A introduced is within the above range, the mixing efficiency in the joining portion is increased. Therefore, a more monodisperse polymer can be obtained, and the concern about the pressure loss is reduced. The flow rate at which the liquid A is introduced may be 5-2,000 mL/min or 10-1,000 mL/min. The flow rate and can also be 20-800 mL/min or 40-600 mL/min.

### -Liquid A containing anionic polymerizable monomer-

The liquid A flowing in the anionic polymerizable monomer supply flow path (1) may be an anionic polymerizable monomer. However, from the viewpoint of melting point, viscosity, and the removal of heat generated by a reaction, generally the liquid A is a solution obtained by dissolving an anionic polymerizable monomer in a solvent. The solvent contained in the liquid A may be appropriately selected according to the type of the monomer to be used. Examples of the solvent include a linear, branched, or cyclic ether solvent, and a hydrocarbon solvent. More specifically, as the ether solvent, it is possible to use e.g. tetrahydrofuran, dioxane, trioxane, methyl t-butyl ether, cyclopentyl methyl ether, ethylene glycol dibutyl ether, diethylene glycol dimethyl ether, diethylene glycol diethyl ether, diethylene glycol dibutyl ether, and derivatives of these. As the hydrocarbon solvent, it is possible to use e.g. hexane, heptane, octane, cyclohexane, methyl cyclohexane, benzene, toluene, xylene, decalin, tetralin, and derivatives of these. Among these, from the viewpoint of the solubility or the polymerization rate of a monomer, tetrahydrofuran is preferably used.

The anionic polymerizable monomer in the liquid A is not particularly limited, and can be appropriately selected according to the purpose. Examples thereof include a vinyl aromatic hydrocarbon, an acrylic monomer, a methacrylic monomer, and a conjugated diene.

Examples of the vinyl aromatic hydrocarbon include styrene, a styrene derivative (p-dimethylsilylstyrene, (p-vinylphenyl)methyl sulfide, p-hexynylstyrene, p-methoxystyrene, p-tert-butyldimethylsiloxystyrene, o-methylstyrene, p-methylstyrene, p-tert-butylstyrene, α-methylstyrene, p-tert-butoxystyrene, p-tert-butoxy-α-methylstyrene, m-tert-butoxystyrene, p-(1-ethoxyethoxy)styrene, or the like), vinyl naphthalene, 2-tert-butoxy-6-vinyl naphthalene, vinyl anthracene, and 1,1-diphenylethylene.

Examples of the acrylic monomer include methyl acrylate, ethyl acrylate, isopropyl acrylate, isobutyl acrylate, tert-butyl acrylate, cyclohexyl acrylate, benzyl acrylate, epoxy acrylate, ethylene glycol diacrylate, diethylene glycol diacrylate, trimethylolpropane triacrylate, and tetramethylene glycol tetraacrylate, 2-hydroxy-1,3-diacryloxypropane, 2,2-bis[4-(acryloxymethoxy)phenyl]propane, 2,2-bis[4-(acryloxyethoxy)phenyl]propane, dicyclopentenyl acrylate, tricyclodecanyl acrylate, tris(acryloxyethyl) isocyanurate, and urethane acrylate.

Furthermore, examples of the methacrylic monomer include monomers having a structure obtained by substituting an acryloyl group of the monomers exemplified as the above acrylic monomer with a methacryloyl group.

Examples of the conjugated diene include 1,3-butadiene, 2-methyl-1,3-butadiene, 2,3-dimethyl-1,3-butadiene, 1,3-pentadiene, 1,3-hexadiene, and 1,3-cyclohexadiene.

One of the above monomers may be used singly, or two or more monomers among the above monomers may be used in combination.

The content of the anionic polymerizable monomer in the liquid A is not particularly limited, and is appropriated adjusted in consideration of e.g. the concentration of an initiator in the liquid B, the flow rate of the liquid B introduced, and the desired molecular weight of the polymer. The content of the anionic polymerizable monomer in the liquid A can be 1-100 mass% for example, and is preferably 3-70 mass%, more preferably 5-50 mass%, and still more preferably 10-40 mass%.

From the viewpoint of viscosity and the removal of heat generated by a reaction, the molar concentration of the anionic polymerizable monomer in the liquid A is preferably 0.5-10 M, and more preferably 0.5-5 M.

### <Anionic polymerization initiator supply flow path (2)>

The anionic polymerization initiator supply flow path (2) is a flow path for supplying the liquid B introduced from the inlet port (II) to the Joining portion (C1). The equivalent diameter of the anionic polymerization initiator supply flow path (2) is preferably 1-10 mm. In a case where the equivalent diameter of the anionic polymerization initiator supply flow path (2) is ≥ 1 mm, even though the flow rate is increased to some extent, it is possible to inhibit the internal pressure of the system from excessively increasing and to further increase the polymer productivity. In a case where the equivalent diameter of the anionic polymerization initiator supply flow path (2) is ≤ 10 mm, the temperature of the liquid can be appropriately controlled at a point in time when the liquid is introduced into the joining portion (C1). The equivalent diameter of the anionic polymerization initiator supply flow path (2) is more preferably 1-8 mm, and even more preferably 1-6 mm.

The length of the anionic polymerization initiator supply flow path (2) is not particularly limited, and the anionic polymerization initiator supply flow path (2) can be constituted, for example, with a tube having a length of about 0.10-15 m (preferably 0.30-10 m).

The material of the tube is not particularly limited. As the tube, it is possible to use a tube formed of a material exemplified above for the anionic polymerizable monomer supply flow path (1).

The flow rate at which the liquid B is introduced from the inlet port (II) is preferably > 10 mL/min to 2,000 mL/min. In a case where the flow rate of the liquid B is within the above range, the mixing efficiency in the joining portion is increased. Therefore, a more monodisperse polymer can be obtained, and the concern about the pressure loss is reduced. The flow rate of the liquid B introduced is preferably 11-2,000 mL/min. Furthermore, the flow rate of the liquid B introduced may be 12-1,000 mL/min or 12-600 mL/min, and can be 12-300 mL/min.

From the viewpoint of controlling the molecular weight of the polymer, a flow rate B at which the liquid B is introduced from the inlet port (II) is preferably lower than a flow rate A at which the liquid A is introduced from the inlet port (I). The ratio between the flow rate A and the flow rate B represented by [flow rate A]/[flow rate B] is (10/1)-(1.3/1). In the present specification, the unit of a flow rate is mL/min (minute).

### -Liquid B containing anionic polymerization initiator-

The liquid B flowing in the anionic polymerization initiator supply flow path (2) may be an anionic polymerization initiator. However, from the viewpoint of viscosity and safety, generally, the liquid B is a solution obtained by dissolving an anionic polymerization initiator in a solvent. The solvent contained in the liquid B may be appropriately selected according to the type of the initiator to be used. Examples thereof include a linear, branched, or cyclic hydrocarbon solvent. More specifically, examples thereof include hexane, heptane, octane, cyclohexane, methyl cyclohexane benzene, toluene, xylene, decalin, tetralin, and derivatives of these.

Particularly, it is preferable that the solvent used in liquid B contains an aromatic hydrocarbon. As the aromatic hydrocarbon, for example, toluene and xylene are preferable. Among these, toluene is preferably used. In a case where an aromatic hydrocarbon is used as the solvent, a monomer conversion rate is further increased, and hence the polymerization rate can be further increased. Particularly, in a case where toluene is used, a monomer conversion rate can be significantly increased, which is advantageous particularly for manufacturing a polymer having a high molecular weight.

### -Anionic polymerization initiator-

The anionic polymerization initiator used in the liquid B is not particularly limited, and a wide variety of initiators used in general anionic polymerization can be used. The anionic polymerization initiator is appropriately selected according to the type of the monomer to be used.

In a case where the method of the polymerization described above is anionic polymerization which is a living polymerization method, examples of the polymerization initiator include an organic lithium compound and an organic magnesium compound.

The organic lithium compound is not particularly limited, and can be appropriately selected from conventionally known organic lithium compounds. Examples thereof include alkyl lithium such as methyl lithium, ethyl lithium, propyl lithium, butyl lithium (e.g. n-butyllithium, sec-butyllithium, iso-butyllithium, or tert-butyllithium), pentyl lithium, hexyl lithium, methoxymethyl lithium, or ethoxymethyl lithium; benzyl lithium such as α-methylstyryllithium, 1,1-diphenyl-3-methylpentryllithium, or 3-methyl-1,1-diphenylpentyllithium; alkenyl lithium such as vinyl lithium, allyl lithium, propenyl lithium, or butenyl lithium, alkynyl lithium such as ethynyl lithium, butynyl lithium, pentynyl lithium, or hexynyl lithium; aralkyl lithium such as benzyl lithium or phenyl ethyl lithium; aryl lithium such as phenyl lithium or naphthyl lithium; heterocyclic lithium such as 2-thienyllithium, 4-pyridyllithium, or 2-quinolyllithium; and an alkyl lithium-magnesium complex such as tri(n-butyl)magnesium lithium or trimethyl magnesium lithium. Among these, alkyl lithium is more preferable, and n-butyllithium is particularly preferable, because these compounds have high reactivity and can cause an initiation reaction at a high speed. Among butyl lithium compounds, n-butyllithium is preferable because, for example, this compound exhibits high stability in a solution state. For example, in a case where sec-butyllithium is used, this compound is gradually precipitated in a suspension state without being dissolved, which leads to a concern that the quality stability in the industrial production of a polymer may become problematic. Furthermore, tert-butyllithium is not suitable for industrial production because this compound is extremely flammable and ignitable. One of the above organic lithium compounds may be used singly, or two or more compounds among the above organic lithium compounds may be used in combination.

Examples of the organic magnesium compound include di-n-butylmagnesium, di-tert-butylmagnesium, di-sec-butylmagnesium, n-butyl-sec-butylmagnesium, n-butyl-ethylmagnesium, di-n-amylmagnesium, dibenzyl magnesium, and diphenyl magnesium.

The content of the anionic polymerization initiator in the liquid B is not particularly limited, and is appropriated adjusted in consideration of e.g. the concentration of the monomer in the liquid A, the flow rate of the liquid A introduced, and the desired molecular weight of the polymer. The content of the anionic polymerization initiator in the liquid B is generally 0.01-20 mass%, more preferably 0.01-15 mass%, even more preferably 0.01-10 mass%, and still more preferably 0.05-10 mass%.

From the viewpoint of controlling the molecular weight of a polymer, the molar concentration of the anionic polymerization initiator in the liquid B is preferably 0.004-1.6 M, more preferably 0.008-1.6 M, and even more preferably 0.008-0.8 M.

Regarding the amount of the liquid A and the liquid B introduced, in a case where the liquid A and the liquid B are assumed to be homogeneously mixed together in the joining portion (C1), a ratio of equivalent of anionic polymerization initiator:equivalent of anionic polymerizable monomer in the mixed solution is preferably (1:5)-(1:5,000), more preferably (1:10)-(1:5,000), and particularly preferably (1:10)-(1:1,000). The equivalent ratio that is within the particularly preferred range described above is advantageous, because in this range, it is possible to obtain a polymer having a molecular weight that is substantially equal to a theoretical molecular weight. That is, in a case where the monomer is a compound having one polymerizable functional group, the amount of the monomer used with respect to 1 mol of the initiator is preferably 5-5,000 mol, more preferably 10-5,000 mol, and particularly preferably 10-1,000 mol.

### <Joining portion (C1)>

The liquid A flowing in the anionic polymerizable monomer supply flow path (1) and the liquid B flowing in the anionic polymerization initiator supply flow path (2) join together in the joining portion (C1). The joining portion (C1) is not particularly limited as long as this portion functions as a mixer, can allow the anionic polymerizable monomer supply flow path (1) and the anionic polymerization initiator supply flow path (2) to join together to form a single flow path, and can send a solution obtained by the joining to the reaction tube (4) connected to the end of the downstream side of the joining portion (C1). In the embodiment shown in Fig. 1, a T-shaped connector is used as the joining portion (C1).

The equivalent diameter of the flow path in the joining portion (C1) is preferably 0.2-10 mm from the viewpoint of further improving the mixing performance, and more preferably 1-5 mm from the viewpoint of further inhibiting pressure loss.

The material of the joining portion (C1) is not particularly limited. For example, it is possible to use the joining portion (C1) consisting of materials such as perfluoroalkoxyalkane (PFA), Teflon (registered trademark), an aromatic polyether ketone-based resin, stainless steel, copper or a copper alloy, nickel or a nickel alloy, titanium or a titanium alloy, quartz glass, and soda lime glass.

As the joining portion (C1), a commercially available mixer can be used. Examples thereof include MICROGLASS REACTOR manufactured by Micro Glass Co., Ltd.; CYTOS manufactured by CPC Systems, Ltd.; YM-1 and YM-2 mixers manufactured by Yamatake Co., Ltd.; MIXING TEE &TEE manufactured by Shimadzu GLC Ltd. (T-shaped connector); MIXING TEE & TEE manufactured by GL Sciences (T-shaped connector); MIXING TEE & TEE manufactured by Upchurch Scientific (T-shaped connector); MIXING TEE & TEE manufactured by Upchurch Scientific (T-shaped connector); MIXING TEE & TEE manufactured by Valco Instruments Co., Inc. (T-shaped connector); and a T-shaped cross connector manufactured by Swagelok Company. All of these can be used in the present invention.

### <Reaction tube (4)>

The liquid A and the liquid B join together and are mixed together in the joining portion (C1), and then flow into the reaction tube (4) which is a reaction flow path. While the mixed solution is flowing to downstream in the reaction tube (4), the anionic polymerizable monomer undergoes anionic polymerization.

The form of the reaction tube (4) is not particularly limited. Generally, a tube is used as the reaction tube (4). The material preferred for the reaction tube (4) is the same as the material preferred for the anionic polymerizable monomer supply flow path (1) described above. The reaction time required for the anionic polymerization can be adjusted according to e.g. the equivalent diameter and the length of the reaction tube (4), and the setting of the flow rate of a liquid feeding pump. The retention time of a reaction solution flowing in the reaction tube (4) may be appropriately adjusted according to the molecular weight of the desired polymer. Generally, the equivalent diameter of the reaction tube (4) is 0.1-50 mm, more preferably 0.2-20 mm, even more preferably 0.4-15 mm, still more preferably 0.7-10 mm, and yet more preferably 1-5 mm. Furthermore, the length of the reaction tube (4) including the static mixer, which will be described later, is preferably 3-100 m, and more preferably 5-100 m.

A static mixer (M) is incorporated into a specific position of the reaction tube. The static mixer is a stationary mixer without a driving portion, which stirs and mixes together fluids introduced into the mixer while sequentially repeating division, rejoining, and direction changing by using a stationary mixing element installed in the mixer. Examples of the static mixer include the Sulzer static mixer, the Kenics static mixer, Toray's static mixers, and static mixers from NORITAKE CO., LIMITED. The static mixer preferably has 4 or more mixing elements, and more preferably has 6-30 mixing elements. It is preferable that these mixing elements are arranged consecutively in a mixer tube having a length of 0.10-2 m. Furthermore, it is possible to adopt an embodiment in which a plurality of static mixers described above are arranged in series. In this case, all of the plurality of static mixers arranged in series form a single unit, which is the static mixer in the present invention.

In the present invention, at an inlet port of the static mixer incorporated into the reaction tube, the number-average molecular weight of the polymer in the polymerization reaction solution is ≥ 2,000. That is, a polymer solution having a number-average molecular weight ≥ 2,000 is introduced into the static mixer and stirred and mixed while flowing in the mixer, such that the polymerization reaction proceeds to finally produce a polymer having a number-average molecular weight of 5,000-200,000. The number-average molecular weight of the polymer in the polymerization reaction solution at the inlet port of the static mixer can be appropriately set according to the molecular weight of the polymer to be finally obtained. For example, the number-average molecular weight can be 2,000-150,000, and is preferably 3,000-120,000 and more preferably 4,000-100,000.

The number-average molecular weight of the polymer obtained by the manufacturing method according to an embodiment of the present invention can be 5,000-170,000, and is preferably 5,000-150,000 or 5,000-120,000.

In the present invention, at the inlet port of the static mixer incorporated into the reaction tube, a monomer conversion rate is preferably ≥ 1.0%. The monomer conversion rate at the inlet port of the static mixer is more preferably ≥ 2.0%, more preferably ≥ 5.0%, even more preferably ≥ 10%, still more preferably ≥ 15%, and particularly preferably ≥ 20%. In a case where the static mixer is disposed as described above, it is possible to more effectively obtain a polymer, which has a high molecular weight equal to or greater than a certain value and a highly monodisperse molecular weight distribution, at an excellent monomer conversion rate. The monomer conversion rate at the inlet port of the static mixer is usually ≤ 97%, and more preferably ≤ 96%. In addition, the monomer conversion rate at the inlet port of the static mixer may be equal to or lower than 90%, ≤ 80%, or ≤ 70%, and is preferably ≤ 60%.

The size of the static mixer used in the present invention is appropriately set according to e.g. the manufacturing scale. For example, an inner equivalent diameter of the tube of the static mixer can be 2-100 mm, and is more preferably 2-60 mm. The inner equivalent diameter of the tube of the static mixer may be 2-50 mm, 2-40 mm, or 2-30 mm, and can be 2-20 mm. Even though the inner cross section of the tube of the static mixer is larger than the inner cross section of the reaction tube 4, the reaction tube 4 and the static mixer can be connected through e.g. a tube capable of connecting the reaction tube and the static mixer.

The length of the static mixer can be 0.10-20 m, is preferably 0.20-20 m, and may be 0.20-10 m, 0.20-5 m, or 0.20-4 m. In a case where a plurality of static mixers are arranged in series, the aforementioned length is the total length of the plurality of static mixers arranged in series (including the distance between the static mixers). In addition, in a case where a plurality of static mixers are arranged in series, the distance between adjacent static mixers can be appropriately set in consideration of e.g. the difference between the size of inner cross section of the tube of a static mixer and the size of inner cross section of the tube of the reaction flow path connected to the static mixer. The distance between adjacent static mixers can be, for example, ≤ 100 cm, ≤ 70 cm, ≤ 40 cm, ≤ 20 cm, or ≤ 10 cm. Furthermore, the distance between adjacent static mixers is preferably equal to or shorter than [equivalent diameter of inner cross section of tube of static mixer × 50], and more preferably equal to or shorter than [equivalent diameter of inner cross section of tube of static mixer × 20]. The distance is also preferably equal to or shorter than [equivalent diameter of inner cross section of tube of static mixer × 10].

The material of the static mixer is not particularly limited, and examples thereof include perfluoroalkoxyalkane (PFA), Teflon (registered trademark), an aromatic polyether ketone-based resin, stainless steel, copper or a copper alloy, nickel or a nickel alloy, titanium or a titanium alloy, quartz glass, and soda lime glass. From the viewpoint of flexibility and chemical resistance, PFA, Teflon, stainless steel, a nickel alloy, or titanium is preferable.

### <Polymerization terminator supply flow path (3)>

The polymerization terminator supply flow path (3) is a flow path for supplying a polymerization terminator introduced from the inlet port (III) to the joining portion (C2). The equivalent diameter of the polymerization terminator supply flow path (3) is more preferably 1-10 mm, even more preferably 1-8 mm, and still more preferably 1-6 mm. The length of the polymerization terminator supply flow path (3) is not particularly limited. For example, polymerization terminator supply flow path (3) can be constituted with a tube having a length of about 0.10-15 m (preferably 0.30-10 m). The material preferred for the polymerization terminator supply flow path (3) is the same as the material preferred for the anionic polymerizable monomer supply flow path (1) described above.

### -Polymerization terminator-

The polymerization terminator is not particularly limited as long as it is a liquid containing a component (polymerization termination component) deactivating anions which are active species. Examples of the polymerization terminator include an aqueous solution or an organic solution containing an alcohol and/or an acidic substance as a polymerization termination component (for example, a solution containing tetrahydrofuran (THF), methyl t-butyl ether, dioxane, cyclopentyl methyl ether, or toluene, as a solvent). Furthermore, as a polymerization terminator, it is also possible to use a liquid containing an electrophile such as a halogenated alkyl or chlorosilane as a polymerization termination component.

Examples of the alcohol as a polymerization termination component include methanol, ethanol, propanol, and isopropyl alcohol.

Examples of the acidic substance as a polymerization termination component include acetic acid and hydrochloric acid.

Examples of halogenated alkyl as a polymerization termination component include alkyl fluoride and alkyl iodide.

In the mixed solution joined with the polymer solution, the amount of the polymerization termination components such as an alcohol, an acidic substance, and an electrophile contained in the polymerization terminator is preferably 1-100 mol with respect to 1 mol of the polymerization initiator.

The flow rate at which the polymerization terminator is introduced from the inlet port (III) is not particularly limited, and can be appropriately selected according to the purpose. For example, the flow rate can be set to 1-3,000 mL/min. The flow rate is more preferably 2-2,000 mL/min, and even more preferably 4-2,000 mL/min. In a case where the flow rate is within the above range, solutions can be rapidly mixed together, and the concerns about the pressure loss is reduced. The flow rate at which the polymerization terminator is introduced may be 5-2,000 mL/min or 10-1,000 mL/min. The flow rate can be 20-800 mL/min or 40-600 mL/min.

### <Joining portion (C2)>

The polymerization reaction solution that has undergone anionic polymerization reaction while flowing in the reaction tube (4) and the polymerization terminator that flows in the polymerization terminator supply flow path (3) join together in the joining portion (C2). The joining portion (C2) is not particularly limited as long as this portion functions as a mixer and allows the reaction tube (4) and the polymerization terminator supply flow path (3) to join together to form a single flow path, and can send the solution formed by the joining to the pipe line (5) of downstream. In the embodiment shown in Fig. 1, a T-shaped connector is used as the joining portion (C2).

The equivalent diameter of the flow path in the joining portion (C2) is preferably 0.2-10 mm from the viewpoint of further improving the mixing performance, and more preferably 1-10 mm from the viewpoint of further inhibiting pressure loss.

The material of the joining portion (C2) is not particularly limited, and it is possible to use a substance consisting of the same materials as those described above regarding the joining portion (C1). Furthermore, specific examples of mixers that can be adopted as the joining portion (C2) are the same as the specific examples of mixers that can be adopted as the joining portion (C1).

### <Pipe line (5)>

While flowing in the pipe line (5), the mixed solution containing the polymerization reaction solution and the polymerization terminator have a reaction, the anions are deactivated, and accordingly, polymerization is terminated.

The pipe line (5) can be constituted with a tube. From the viewpoint of more precisely controlling the liquid temperature of the liquid flowing in the pipe line (5), the equivalent diameter of the pipe line (5) is preferably 1-50 mm, and more preferably 1-10 mm. The length of the pipe line (5) may be appropriately adjusted according to the equivalent diameter, the flow rate, and the molecular weight of the desired polymer. The length of the pipe line (5) is preferably 1-20 m, and more preferably 2-10 m. The material preferred for the pipe line (5) is the same as the material preferred for the anionic polymerizable monomer supply flow path (1) described above.

The liquid temperature of the liquid flowing in the pipe line (5) is not particularly limited. However, as shown in Fig. 1, it is preferable that at least the temperature of the upstream side of the liquid is the same as the temperature of the liquid flowing in the reaction tube (4).

The flow rate of the liquid flowing in the pipe line (5) equals the sum of the flow rate of the liquid flowing in the polymerization terminator supply flow path (3) and the flow rate of the liquid flowing in the reaction tube (4).

In a case where a liquid is collected at the downstream of the pipe line (5), the desired polymer can be obtained.

Another embodiment of the flow-type reaction system for performing the manufacturing method according to an embodiment of the present invention will be described using Fig. 2. The embodiment shown Fig. 2 is the same as the embodiment shown Fig. 1, except that the anionic polymerizable monomer supply flow path (1) branches off into two flow paths in the middle of the flow path (1). Preferred embodiments (preferred embodiments of e.g. flow rate and temperature control) are also the same for the reaction systems shown in Figs. 1 and 2. In the embodiment shown in Fig. 2, the anionic polymerizable monomer supply flow path (1) branches off into two flow paths in the middle of the flow path (1). The two flow paths branched off from the flow path (1) are introduced into the joining portion (C3), which is a cross connector, through connection ports facing each other and join together. In this embodiment, the anionic polymerization initiator supply flow path (2), through which the liquid B flows, is connected to a connection port of the joining portion (C3) that faces a site of the joining portion (C3) connected to the reaction tube (4). In a case where the anionic polymerizable monomer supply flow path (1) branches off as described above, the monomer and the initiator are more rapidly and more homogeneously mixed together in the joining portion (C3). Accordingly, the molecular weight distribution of the obtained polymer can be further narrowed, and a highly monodisperse polymer can be obtained. The inner diameter of the cross connector is preferably 1-10 mm.

A wide variety of commercially available products can be widely used as the cross connector. For example, as the commercially available products, it is possible to use a cross connector manufactured by Upchurch Scientific; UNION CROSS manufactured by Swagelok Company; a 4-way joint manufactured by EYELA.

In the embodiment shown in Fig. 2, the anionic polymerizable monomer supply flow path (1) branches off into two flow paths. However, the flow path (1) may branches off into three or more flow paths, and this embodiment is also preferable as an embodiment of the present invention. In addition, an embodiment may also be adopted in which the anionic polymerization initiator supply flow path (2) branches off with or without branching off the anionic polymerizable monomer supply flow path (1) and the flow paths (1) and (2) join together in a joining portion. This embodiment is also included in the embodiments of the present invention. Particularly, it is preferable to adopt an embodiment in which the anionic polymerizable monomer supply flow path (1) branches off into two or more flow paths and the anionic polymerization initiator supply flow path (2) does not branch off or branches off into two or more flow paths. The relationship between the number of branches of the anionic polymerizable monomer supply flow path (1) and the number of branches of the anionic polymerization initiator supply flow path (2) is more preferably set as in the following embodiment i) or ii).
i) Embodiment in which the anionic polymerizable monomer supply flow path (1) has two branches while the anionic polymerization initiator supply flow path (2) has no branch.
ii) Embodiment in which the anionic polymerizable monomer supply flow path (1) has three or more branches, the anionic polymerization initiator supply flow path (2) has two or more branches, and the number of branches of the anionic polymerizable monomer supply flow path (1) is larger than the number of branches of the anionic polymerization initiator supply flow path (2).

In a case where the anionic polymerizable monomer supply flow path (1) branches off, the flow rate of the liquid A described above means a flow rate in the flow path not yet branching off (that is, the total flow rate of flow paths (1) branched off from the original flow path (1)). Likewise, in a case where the anionic polymerization initiator supply flow path (2) branches off, the flow rate of the liquid B described above means a flow rate in the flow path not yet branching off (that is, the total flow rate of flow paths (2) branched off from the original flow path (2)).

The total number of flow paths, which are connected to the joining portion of the liquid A and the liquid B and through which the liquid A flows, and flow paths, which are connected to the joining portion of the liquid A and the liquid B and through which the liquid B flows, is preferably 3-10, more preferably 3-8, even more preferably 3-6, and still more preferably 3-5. In this case, it is preferable that the number of branches of the anionic polymerizable monomer supply flow path (1) is larger than the number of branches of anionic polymerization initiator supply flow path (2).

The joining portion, to which the above number of flow paths can be connected, can be constituted with a connector having as many connection ports as the number of flow paths to be connected thereto. For example, in a case where a 6-way connector is used, the total number of flow paths through which the liquid A flows and flow paths through which the liquid B flows can be set to 5, the remaining one connection port can be used as an outlet, and the reaction tube can be connected to the outlet.

As the connector having 5 or more connection ports that is usable in the present invention, a wide variety of commercially available products can be used. Examples of the commercially available products include a 6-way joint manufactured by EYELA, a 6-port joint manufactured by Sugiyama Shoji, and a 6-port manifold manufactured by Upchurch Scientific.

The connector having 5 or more connection ports preferably has an inner diameter of 1-10 mm.

Hitherto, an embodiment has been described in which the flow path having branches has one inlet port and branches off in the middle of the flow path. However, an embodiment may also be adopted in which a plurality of inlet ports are provided for one solution, and this embodiment is also included in the embodiments of the present invention. For example, it is possible to adopt an embodiment in which a plurality of anionic polymerizable monomer supply flow paths (1) are prepared and the plurality of anionic polymerizable monomer supply flow paths (1) are caused to join together in a joining portion. This embodiment is also applied to the anionic polymerization initiator supply flow path (2).

In the embodiments shown in Figs. 1 and 2, the retention time (reaction time) is preferably ≥ 15 seconds, more preferably 20-1,800 seconds, and even more preferably 20-600 seconds. The retention time (reaction time) in the embodiments shown in Figs. 1 and 2 means the time taken for the mixed solution of the liquid A and the liquid B to be discharged from the outlet of a pipe line (5) after being introduced into the reaction tube (4).

According to the present method, it is possible to obtain a polymer, which has a high molecular weight in a certain range and a highly monodisperse molecular weight distribution, at an excellent monomer conversion rate.

The present invention has been described together with preferred embodiments thereof. Regarding the above embodiments, the present invention provides, for example, a method for manufacturing a polymer described below.

A method for manufacturing a polymer in which anionic polymerization reaction is performed by a flow-type reaction, the method including introducing a liquid A containing an anionic polymerizable monomer, a liquid B containing an anionic polymerization initiator, and a polymerization terminator into different flow paths, allowing the liquids to flow in the flow paths, allowing the liquid A and the liquid B to join together, subjecting the anionic polymerizable monomer to anionic polymerization while the liquids having joined together are flowing to downstream in a reaction flow path, and allowing a solution, which is obtained by the polymerization reaction and flows in the reaction flow path, and the polymerization terminator to join together so as to terminate the polymerization reaction and to obtain a polymer having a number-average molecular weight of 5,000-200,000, in which a static mixer is disposed in the reaction flow path, a polymer having a number-average molecular weight ≥ 2,000 is introduced into an inlet port of the static mixer, a temperature of the liquid A and the liquid B is set to 0-40°C, and a temperature of a solution (polymerization reaction solution) obtained by joining of the liquid A and the liquid B flowing in the reaction flow path is set to -80 to -5°C.

A flow-type reaction system for manufacturing a polymer by an anionic polymerization reaction, the flow-type reaction system having a first flow path through which an anionic polymerizable monomer flows, a second flow path through which an anionic polymerization initiator flows, a third flow path through which a polymerization terminator flows, a first joining portion where the first flow path and the second flow path join together, a reaction tube connected to downstream of the first joining portion, a second joining portion where the reaction tube and the third flow path join together, and a pipe line connected to downstream of the second joining portion, in which a static mixer is disposed in the reaction tube, a polymer having a number-average molecular weight ≥ 2,000 is introduced into an inlet port of the static mixer, a polymer having a number-average molecular weight of 5000-200,000 is obtained from the pipe line, a temperature of the first flow path and the second flow path is set to 0-40°C, and a temperature of the reaction tube is set to -80°C to -5°C.

In the flow-type reaction system, the temperature of the first joining portion can also be set to 0-40°C.

Hereinafter, the present invention will be more specifically described based on examples.

### Examples

### [Example 1]

By using the flow-type reaction system 200 constituted as shown in Fig. 2, a polymer was synthesized by an anionic polymerization reaction. Details of each portion are as below.

### Liquid feeding pump (not shown in drawing):

As all of the liquid feeding pumps, PU716B and PU718 manufactured by GL Sciences were used. On the side of flow rate outlet of the pumps, a pulse damper HPD-1, a backpressure valve (44-2361-24) manufactured by TESCOM, and a relief valve RHA (4 MPa) manufactured by IBS COMPANY are sequentially installed.

### Low-temperature constant-temperature tank (R1):

A tabletop small low-temperature water bath CBi-270A manufactured by AS ONE Corporation was used. The temperature thereof was set to -10°C.

### Anionic polymerizable monomer supply flow path (1):

The flow path (1) had a structure established by dividing a single SUS tube into two parts by using a T-shaped connector.

More specifically, a T-connector (U-429, inner diameter: 1.0 mm) manufactured by Upchurch Scientific was connected to an SUS316 tube having an outer diameter of 1/16 inch, an inner diameter of 1.0 mm, and a length of 10 m. Furthermore, two SUS 316 tubes each having an outer diameter of 1/16 inch, an inner diameter of 1.0 mm, and a length of 5 cm were connected to the T-connector such that the tubes faced each other, thereby preparing the anionic polymerizable monomer supply flow path (1).

### Anionic polymerization initiator supply flow path (2):

An SUS316 tube was used which has an outer diameter of 1/16 inches, an inner diameter of 1.0 mm, and a length of 10 m.

### Joining portion (C3) (cross connector):

A cross connector (U-431, inner diameter: 1.0 mm) manufactured by Upchurch Scientific was used.

The two SUS316 tubes, which were connected to the T-shaped connector constituting the anionic polymerizable monomer supply flow path (1) so as to face each other, were connected to two connection ports facing each other among four connection ports of the aforementioned cross connector. One of the two other connection ports was connected to the anionic polymerization initiator supply flow path (2), and the other connection port was used as an outlet for discharging a liquid (connection port for the reaction tube (4)).

### Reaction tube (4):

From the upstream side to the downstream side, (i) SUS316 tube having an outer diameter of 1/8 inch, an inner diameter of 2.17 mm, and a length of 12 m and (ii) three static mixers (manufactured by NORITAKE CO., LIMITED, diameter of inner cross section of the tube: 6 mm, length: 34 cm, 27-stage mixing element) arranged in series were connected in this order. The three static mixers were connected using an SUS316 tube having an outer diameter of 1/8 inch, an inner diameter of 2.17 mm, and a length of 3 cm.

### Polymerization terminator supply flow path (3):

An SUS316 tube was used which has an outer diameter of 1/8 inches, an inner diameter of 2.17 mm, and a length of 10 m.

### Joining portion (C2) (T-shaped connector):

A T-connector (U-429, inner diameter: 1.0 mm) manufactured by Upchurch Scientific was used.

The reaction tube (4) and the polymerization terminator supply flow path (3) were connected to two connection ports facing each other among three connection ports of the T-connector. The remaining connection port was used as an outlet for discharging a liquid (connection port for the pipe line (5)).

### Pipe line (5):

From the upstream side to the downstream side, (i) SUS316 tube having an outer diameter of 1/8 inch, an inner diameter 2.17 mm, and a length 2.5 m, (ii) backpressure valve (manufactured by TESCOM, 44-2361-24), and (Iii) Teflon tube having an outer diameter of 1/8 inch, an inner diameter of 2.17 mm, and a length of 0.5 m were connected in this order.

Monomer-containing liquid A to be introduced into anionic polymerizable monomer supply flow path (1):

### <Styrene/tetrahydrofuran (THF)>

THF (deoxidation grade) manufactured by Wako Pure Chemical Industries, Ltd. and styrene (special grade) manufactured by Wako Pure Chemical Industries, Ltd. were added to a 5 L SUS tank, thereby preparing 4 L of a 2 M-styrene/THF solution. This solution was dehydrated using a molecular sieve 3A, thereby obtaining a liquid A.

In the present example, the description of "xM-y/z" means a solution obtained by dissolving y in a solvent z, in which the concentration of y in the solution is xM.

Initiator-containing liquid B to be introduced into anionic polymerization initiator supply flow path (2):

### <n-Butyllithium (nBuLi)/toluene>

Toluene (deoxidation grade) manufactured by Wako Pure Chemical Industries, Ltd. was added to a 5 L SUS tank and cooled to 0°C. nBuLi (1.6M-nBuLi/hexane solution) manufactured by KANTO KAGAKU was added thereto, and titrated using menthol/bipyridine, thereby preparing 4 L of a 0.008 M-nBuLi/toluene solution. The solution was adopted as a liquid B.

Polymerization terminator to be introduced into polymerization terminator supply flow path (3):

### <Methanol (MeOH)/THF>

THF (deoxidation grade) manufactured by Wako Pure Chemical Industries, Ltd. and MeOH (deoxidation grade) manufactured by Wako Pure Chemical Industries, Ltd., were added to a 3 L SUS tank, thereby obtaining 4 L of a 0.5 M-MeOH/THF solution. The obtained solution was used as a polymerization terminator.

Liquid feeding condition:
Liquid A (2M-styrene/THF): 150 mL/min
Liquid B (0.008 M-nBuLi/toluene): 57 mL/min
Polymerization terminator (0.5 M-MeOH/THF): 90 mL/min

### Extraction:

From the outlet of the pipe line (5), 10 mL of a solution containing a polymer was collected, and the molecular weight and the molecular weight distribution of the polymer were measured by gel permeation chromatography (GPC). As a result, the number-average molecular weight (Mn) was 68,000, and the molecular weight distribution (dispersity, Mw/Mn) was 1.05. The monomer conversion rate was 100%.

In the present specification, GPC was performed under the following condition.
Device: HLC-8220GPC (manufactured by Tosoh Corporation)
Detector: differential refractometer (Refractive Index (RI) detector)
Pre-column: TSK GUARD COLUMN HXL-L 6 mm × 40 mm (manufactured by Tosoh Corporation)
Sample side column: the following three columns connected in series in the following order (manufactured by Tosoh Corporation)
   · TSK-GEL GMHXL 7.8 mm × 300 mm
   · TSK-GEL G4000HXL 7.8 mm × 300 mm
   · TSK-GEL G2000HXL 7.8 mm × 300 mm
Reference side column: TSK-GEL G1000HXL 7.8 mm × 300 mm
Temperature of constant-temperature tank: 40°C
Mobile layer: THF
Flow rate of mobile layer on sample side: 1.0 mL/min
Flow rate of mobile layer on reference side: 1.0 mL/min
Sample concentration: 0.1% by mass
Amount of sample injected: 100 µL
Data pickup time: 5 minutes to 45 minutes after injection of sample
Sampling pitch: 300 msec

The monomer conversion rate (%) was determined by calculating the ratio of the peak surface area of the polymer to the total peak surface area of the monomer and the polymer in the GPC chart.

### [Comparative Example 1]

A polymer was obtained in the same manner as in Example 1, except that an SUS316 tube having an outer diameter of 1/8 inch, an inner diameter of 2.17 mm, and a length of 12 m was used as the reaction tube (4) (except that a static mixer was not connected). The obtained polymer had a number-average molecular weight of 67,000, a monomer conversion rate of 96%, and a molecular weight distribution (dispersity, Mw/Mn) of 1.11.

The results of Comparative Example 1 agree with the number-average molecular weight, monomer conversion rate, and molecular weight distribution of the polymer at the inlet port of the static mixer (end of upstream side in a case where the three connected static mixers are regarded as a single static mixer) under the conditions of Example 1.

Through the comparison between Example 1 and Comparative Example 1, it has been found that in a case where the static mixer is disposed at a specific position of the reaction tube, it is possible to obtain a polymer having a monomer conversion rate of 100% and to narrow the molecular weight distribution.

Even though the length of the reaction tube was set to 14 m in Comparative Example 1, the monomer conversion rate and molecular weight distribution of the obtained polymer were the same as those in Comparative Example 1.

### [Example 2]

A polymer was obtained in the same manner as in Example 1, except that in Example 1, the type of liquid, the liquid feeding conditions, and the reaction tube (4) were changed as follows.
Liquid A (1.4 M-meta-tert-butoxystyrene/THF): 129 mL/min
Liquid B (0.08 M-nBuLi/toluene): 18 mL/min
Polymerization terminator (0.5 M-MeOH/THF): 107 mL/min

### Reaction tube (4):

From the upstream side to the downstream side, (i) SUS316 tube having an outer diameter of 1/8 inch, an inner diameter of 2.17 mm, and a length of 0.2 m and (ii) four static mixers (manufactured by NORITAKE CO., LIMITED, diameter of inner cross section of the tube: 6 mm, length: 34 cm, 27-stage mixing element) arranged in series were connected in this order.

### Extraction:

From the outlet of the pipe line (5), 10 mL of a solution containing a polymer was collected, and the molecular weight and the molecular weight distribution of the polymer were measured by gel permeation chromatography (GPC). As a result, the number-average molecular weight (Mn) was 22,000, the monomer conversion rate was 100%, and the molecular weight distribution (dispersity, Mw/Mn) was 1.05.

### [Comparative Example 2A]

A polymer was obtained in the same manner as in Example 2, except that an SUS316 tube having an outer diameter of 1/8 inch, an inner diameter of 2.17 mm, and a length of 0.2 m was used as the reaction tube (4) (except that static mixers were not connected). The obtained polymer had a number-average molecular weight of 5,000, a monomer conversion rate of 28%, and a molecular weight distribution (dispersity, Mw/Mn) of 1.07.

The results of Comparative Example 2 agree with the number-average molecular weight, monomer conversion rate, and molecular weight distribution of the polymer at the inlet port of the static mixer (end of upstream side in a case where the four connected static mixers are regarded as a single static mixer) under the conditions of Example 2.

### [Comparative Example 2B]

A polymer was obtained in the same manner as in Example 2, except that the mixing element was removed from the static mixer used as the reaction tube (4) (that is, the static mixer was in the form of simple tube). The obtained polymer had a number-average molecular weight of 21,000, a monomer conversion rate of 96%, and a molecular weight distribution (dispersity, Mw/Mn) of 1.09.

Through the comparison between Example 2 and Comparative Example 2B, it has been found that in a case where the static mixer is disposed at a specific position of the reaction tube, it is possible to obtain a polymer having a monomer conversion rate of 100% and to narrow the molecular weight distribution.

### [Example 3]

A polymer was obtained in the same manner as in Example 2, except that in Example 2, the liquid feeding conditions and the reaction tube (4) were changed as follows.
Liquid A (1.4 M-meta-tert-butoxystyrene/THF): 129 mL/min
Liquid B (0.08 M-nBuLi/toluene): 36 mL/min
Polymerization terminator (0.5 M-MeOH/THF): 107 mL/min

### Reaction tube (4):

From the upstream side to the downstream side, (i) SUS316 tube having an outer diameter of 1/8 inch, an inner diameter of 2.17 mm, and a length of 0.1 m and (ii) four static mixers (manufactured by NORITAKE CO., LIMITED, diameter of inner cross section of the tube: 6 mm, length: 34 cm, 27-stage mixing element) arranged in series were connected in this order.

### Extraction:

From the outlet of the pipe line (5), 10 mL of a solution containing a polymer was collected, and the molecular weight and the molecular weight distribution of the polymer were measured by gel permeation chromatography (GPC). As a result, the number-average molecular weight (Mn) was 10,500, the monomer conversion rate was 100%, and the molecular weight distribution (dispersity, Mw/Mn) was 1.06.

### [Comparative Example 3A]

A polymer was obtained in the same manner as in Example 3, except that an SUS316 tube having an outer diameter of 1/8 inch, an inner diameter of 2.17 mm, and a length of 0.1 m was used as the reaction tube (4) (except that static mixers were not connected). The obtained polymer had a number-average molecular weight of 2,000, a monomer conversion rate of 15%, and a molecular weight distribution (dispersity, Mw/Mn) of 1.10.

The results of Comparative Example 3 agree with the number-average molecular weight, monomer conversion rate, and molecular weight distribution of the polymer at the inlet port of the static mixer (end of upstream side in a case where the four connected static mixers are regarded as a single static mixer) under the conditions of Example 3.

### [Comparative Example 3B]

A polymer was obtained in the same manner as in Example 3, except that the mixing element was removed from the static mixer used as the reaction tube (4) (that is, the static mixer was in the form of simple tube). The obtained polymer had a number-average molecular weight of 9,500, a monomer conversion rate of 97%, and a molecular weight distribution (dispersity, Mw/Mn) of 1.09.

Through the comparison between Example 3 and Comparative Example 3B, it has been found that in a case where the static mixer is disposed at a specific position of the reaction tube, it is possible to obtain a polymer having a monomer conversion rate of 100% and to narrow the molecular weight distribution.

### [Reference Example 1A]

A polymer was obtained in the same manner as in Example 2, except that in Example 2, the liquid feeding conditions and the reaction tube (4) were changed as follows.
Liquid A (1.4 M-meta-tert-butoxystyrene/THF): 130 mL/min
Liquid B (0.08 M-nBuLi/toluene): 36 mL/min
Polymerization terminator (0.5 M-MeOH/THF): 180 mL/min

### Reaction tube (4):

From the upstream side to the downstream side, (i) SUS316 tube having an outer diameter of 1/8 inch, an inner diameter of 2.17 mm, and a length of 0.02 m and (ii) three static mixers (manufactured by NORITAKE CO., LIMITED, diameter of inner cross section of the tube: 3.4 mm, length: 13.5 cm, 24-stage mixing element) arranged in series were connected in this order.

### Extraction:

From the outlet of the pipe line (5), 10 mL of a solution containing a polymer was collected, and the molecular weight and the molecular weight distribution of the polymer were measured by gel permeation chromatography (GPC). As a result, the number-average molecular weight (Mn) was 1,100, the monomer conversion rate was 5%, and the molecular weight distribution (dispersity, Mw/Mn) was 1.19.

### [Reference Example 1B]

A polymer was obtained in the same manner as in Reference Example 1A, except that the mixing element was removed from the static mixer used as the reaction tube (4) (that is, the static mixer was in the form of simple tube). The obtained polymer had a number-average molecular weight of 1,120, a monomer conversion rate of 5%, and a molecular weight distribution (dispersity, Mw/Mn) of 1.19.

Through the comparison between Reference Examples 1A and 1B, it has been found that in a case where the molecular weight of the obtained polymer is smaller than the molecular weight specified by the present invention, even though a static mixer is incorporated into the reaction tube, a monodisperse molecular weight distribution is not obtained.

### [Example 4]

A polymer was obtained in the same manner as in Example 2, except that in Example 2, the type of liquid, the liquid feeding conditions, the anionic polymerizable monomer supply flow path (1), the anionic polymerization initiator supply flow path (2), the reaction tube (4), and the joining portion (C2) were changed as follows, and the temperature was set as follows. In the reaction systems of Example 4 and Examples 5 to 10 which will be described later, the reaction tube is designed such that the number-average molecular weight of the polymer at the inlet port of the static mixer is equal to or higher than 2,000.
Liquid A (1.8 M-meta-tert-butoxystyrene/THF): 120 mL/min
Liquid B (0.03 M-nBuLi/toluene): 60 mL/min
Polymerization terminator (1.0 M-MeOH/THF): 80 mL/min

### Anionic polymerizable monomer supply flow path (1):

The flow path (1) had a structure established by dividing a single SUS tube into two parts by using a T-shaped connector.

More specifically, a T-connector (U-429, inner diameter 1.0 mm) manufactured by Upchurch Scientific was connected to an SUS316 tube having an outer diameter of 1/8 inch, an inner diameter of 2.17 mm, and a length of 10 m. Furthermore, two SUS 316 tubes each having an outer diameter of 1/16 inch, an inner diameter of 1.0 mm, and a length of 5 cm were connected to the T-connector such that the tubes faced each other, thereby preparing the anionic polymerizable monomer supply flow path (1).

### Anionic polymerization initiator supply flow path (2):

An SUS316 tube was used which has an outer diameter of 1/8 inches, an inner diameter of 2.17 mm, and a length of 10 m.

### Reaction tube (4):

From the upstream side to the downstream side, (i) SUS316 tube having an outer diameter of 1/8 inch, an inner diameter of 2.17 mm, and a length of 30 m and (ii) three static mixers (manufactured by NORITAKE CO., LIMITED, diameter of inner cross section of the tube: 6 mm, length: 34 cm, 27-stage mixing element) arranged in series were connected in this order. The three static mixers were connected using an SUS316 tube having an outer diameter of 1/8 inch, an inner diameter of 2.17 mm, and a length of 3 cm.

### Joining portion (C2):

UNION TEE (SS-200-3, inner diameter: 2.3 mm) manufactured by Swagelok Company was used.

The reaction tube (4) and the polymerization terminator supply flow path (3) were connected to two connection ports facing each other among three connection ports of UNION TEE (T-shaped connector) described above. The remaining connection port was used as an outlet for discharging a liquid (connection port for the pipe line (5)).

### Temperature setting:

The anionic polymerizable monomer supply flow path (1), the anionic polymerization initiator supply flow path (2), and the joining portion (C3) were arranged in a low-temperature constant-temperature tank, and the temperature thereof was set to 20°C.

Furthermore, the reaction tube (4) (including a static mixer), the polymerization terminator supply flow path (3), the joining portion (C2), and the pipe line (5) were immersed in a dry ice/methanol bath at -50°C.

In Example 4, the obtained polymer had a number-average molecular weight of 22,000, a monomer conversion rate of 100%, and a molecular weight distribution (dispersity, Mw/Mn) of 1.03.

### [Example 5] (Reference)

A polymer was obtained in the same manner as in Example 4, except that in Example 4, all of the anionic polymerizable monomer supply flow path (1), the anionic polymerization initiator supply flow path (2), the joining portion (C3), the reaction tube (4), the polymerization terminator supply flow path (3), the joining portion (C2), and the pipe line (5) were arranged in a low-temperature constant-temperature tank set to -10°C. The obtained polymer had a number-average molecular weight of 21,500, a monomer conversion rate of 100%, and a molecular weight distribution (dispersity, Mw/Mn) of 1.07.

### [Example 6]

A polymer was obtained in the same manner as in Example 4, except that in Example 4, the type of liquid, the liquid feeding conditions, and the reaction tube (4) were changed as follows, and the temperature was set as follows.
Liquid A (1.4 M-para-tert-butoxystyrene/THF): 110 mL/min
Liquid B (0.026 M-nBuLi/toluene): 71 mL/min
Polymerization terminator (1.0 M-MeOH/THF): 56 mL/min

### Reaction tube (4):

From the upstream side to the downstream side, (i) SUS316 tube having an outer diameter of 1/8 inch, an inner diameter of 2.17 mm, and a length of 15 m, (ii) SUS316 tube having an outer diameter of 8 mm, an inner diameter of 6 mm, and a length of 15 m, and (iii) three static mixers (manufactured by NORITAKE CO., LIMITED, diameter of inner cross section of the tube: 6 mm, length: 34 cm, 27-stage mixing element) arranged in series were connected in this order. The three static mixers were connected using an SUS316 tube having an outer diameter of 1/8 inch, an inner diameter of 2.17 mm, and a length of 3 cm.

### Temperature setting:

The anionic polymerizable monomer supply flow path (1), the anionic polymerization initiator supply flow path (2), and the joining portion (C3) were arranged in a low-temperature constant-temperature tank, and the temperature thereof was set to 10°C.

Furthermore, the portion (i) of the reaction tube (4) was immersed in a dry ice/methanol bath at -30°C. In addition, the portions (ii) and (iii) of the reaction tube (4), the polymerization terminator supply flow path (3), the joining portion (C2), and the pipe line (5) were immersed in a dry ice/methanol bath at -50°C.

In Example 6, the obtained polymer had a number-average molecular weight of 15,100, a monomer conversion rate of 100%, and a molecular weight distribution (dispersity, Mw/Mn) of 1.02.

### [Example 7] (Reference)

A polymer was obtained in the same manner as in Example 6, except that in Example 6, all of the anionic polymerizable monomer supply flow path (1), the anionic polymerization initiator supply flow path (2), the joining portion (C3), the reaction tube (4), the polymerization terminator supply flow path (3), the joining portion (C2), and the pipe line (5) were arranged in a low-temperature constant-temperature tank set to -10°C. The obtained polymer had a number-average molecular weight of 15,000, a monomer conversion rate of 100%, and a molecular weight distribution (dispersity, Mw/Mn) of 1.07.

### [Example 8]

A polymer was obtained in the same manner as in Example 4, except that in Example 4, all of the anionic polymerizable monomer supply flow path (1), the anionic polymerization initiator supply flow path (2), and the joining portion (C3) were arranged in a low-temperature constant-temperature tank, and the temperature thereof was set to 5°C. The obtained polymer had a number-average molecular weight of 22,500 a monomer conversion rate of 100%, and a molecular weight distribution (dispersity, Mw/Mn) of 1.04.

### [Example 9]

A polymer was obtained in the same manner as in Example 4, except that in Example 4, the reaction tube (4) (including a static mixer), the polymerization terminator supply flow path (3), the joining portion (C2), and the pipe line (5) were immersed in a dry ice/methanol bath at -10°C. The obtained polymer had a number-average molecular weight of 22,800, a monomer conversion rate of 100%, and a molecular weight distribution (dispersity, Mw/Mn) of 1.04.

### [Example 10]

A polymer was obtained in the same manner as in Example 6, except that in Example 6, all of the anionic polymerizable monomer supply flow path (1), the anionic polymerization initiator supply flow path (2), and the joining portion (C3) were arranged in a low-temperature constant-temperature tank, the temperature thereof was set to 30°C, and the portions (i) to (iii) of the reaction tube (4), the polymerization terminator supply flow path (3), the joining portion (C2), and the pipe line (5) were immersed in a dry ice/methanol bath at -10°C. The obtained polymer had a number-average molecular weight of 16,200 a monomer conversion rate of 100%, and a molecular weight distribution (dispersity, Mw/Mn) of 1.04.

### Explanation of References

- 100, 200: flow-type reaction system
- I, II, III: inlet port
- 1: anionic polymerizable monomer supply flow path
- 2: anionic polymerization initiator supply flow path
- 3: polymerization terminator supply flow path
- 4: reaction tube
- M: static mixer
- 5: pipe line
- C1, C2, C3: joining portion
- R1: low-temperature constant-temperature tank

## Claims

1. A method for manufacturing a polymer in which anionic polymerization reaction is performed by a flow-type reaction, the method comprising:
- introducing a liquid A containing an anionic polymerizable monomer, a liquid B containing an anionic polymerization initiator, and a polymerization terminator into different flow paths;
- allowing the liquids to flow in the flow paths;
- allowing the liquids A and B to join together; subjecting the anionic polymerizable monomer to anionic polymerization while the liquids having joined together are flowing to downstream in a reaction flow path;
- allowing a solution, which is obtained by the polymerization reaction and flows in the reaction flow path, and the polymerization terminator to join together so as to terminate the polymerization reaction and to obtain a polymer having a number-average molecular weight of 5,000-200,000,
wherein
- a static mixer is disposed in the reaction flow path, and a polymer having a number-average molecular weight ≥ 2,000 is introduced into an inlet port of the static mixer,
- the temperature of the liquids A and B is set to 0-40°C, and the temperature of the polymerization reaction solution obtained by joining of the liquids A and B flowing in the reaction flow path is set to -80°C to -5°C, and
- the ratio of the flow rate A at which the liquid A is introduced and the flow rate B at which the liquid B [flow rate A]/[flow rate B] is set to (10/1)-(1.3/1).

2. The method of claim 1, wherein a flow rate at which the liquid B is introduced is > 10 to 2,000 mL/min.

3. The method of claim 1 or 2, wherein both the flow path through which the liquid A flows and the flow path through which the liquid B flows have an equivalent diameter of 1-10 mm.

4. The method of any of claims 1-3, wherein the monomer conversion rate is ≥ 1.0% at the inlet port of the static mixer.

5. The method of any of claims 1-4, wherein the equivalent diameter of the static mixer is 2-100 mm.

6. The method of any of claims 1-5, wherein the length of the reaction flow path is 3-100 m.

7. The method of any of claims 1-6, wherein the number of flow paths which are connected to a joining portion of the liquids A and B and through which the liquid A flows and the number of flow paths which are connected to the joining portion of the liquids A and B and through which the liquid B flows is 3-10 in total.

8. The method of any of claims 1-7, wherein at least one organic lithium compound or at least one organic magnesium compound is used as the anionic polymerization initiator.

9. The method of any of claims 1-8, wherein n-butyllithium is used as the anionic polymerization initiator.

10. The method of any of claims 1-9, wherein the liquid B contains an aromatic hydrocarbon.

## Patentansprüche

1. Verfahren zum Herstellen eines Polymers, bei dem anionische Polymerisationsreaktion durch eine Reaktion des Flusstyps durchgeführt wird, wobei das Verfahren umfasst:
- Einführen einer Flüssigkeit A, die ein anionisch polymerisierbares Monomer enthält, einer Flüssigkeit B, die einen anionischen Polymerisationsinitiator enthält, und eines Polymerisationsstoppers in unterschiedliche Strömungswege;
- Strömenlassen der Flüssigkeiten in den Strömungswegen;
- Miteinandervermischenlassen der Flüssigkeiten A und B; Unterziehen des anionisch polymerisierbaren Monomers einer anionischen Polymerisation, während die miteinander vermischten Flüssigkeiten stromabwärts in einem Reaktionsströmungsweg strömen;
- Miteinandervermischenlassen einer Lösung, die durch die Polymerisationsreaktion erhalten wird und in dem Reaktionsströmungsweg strömt, und des Polymerisationsstoppers, um die Polymerisationsreaktion zu beenden und ein Polymer mit einem zahlenmittleren Molekulargewicht von 5.000-200.000 zu erhalten,
wobei
- ein statischer Mischer in dem Reaktionsströmungsweg angeordnet ist und ein Polymer mit einem zahlenmittleren Molekulargewicht ≥ 2.000 in eine Einlassöffnung des statischen Mischers eingeführt wird,
- die Temperatur der Flüssigkeiten A und B auf 0-40 °C eingestellt wird und die Temperatur der Polymerisationsreaktionslösung, die durch Vermischen der Flüssigkeiten A und B, die in dem Reaktionsströmungsweg strömen, erhalten wird, auf -80 °C bis -5 °C eingestellt wird, und
- das Verhältnis der Strömungsrate A, mit der die Flüssigkeit A eingeführt wird, und der Strömungsrate B, mit der die Flüssigkeit B eingeführt wird, [Strömungsrate A]/[Strömungsrate B] auf (10/1)-(1,3/1) eingestellt wird.

2. Verfahren nach Anspruch 1, wobei eine Strömungsrate, mit der die Flüssigkeit B eingeführt wird, > 10 bis 2.000 mL/min beträgt.

3. Verfahren nach Anspruch 1 oder 2, wobei sowohl der Strömungsweg, durch den die Flüssigkeit A strömt, als auch der Strömungsweg, durch den die Flüssigkeit B strömt, einen äquivalenten Durchmesser von 1-10 mm aufweisen.

4. Verfahren nach einem der Ansprüche 1 bis 3, wobei die Monomerumwandlungsrate an der Einlassöffnung des statischen Mischers ≥ 1,0 % beträgt.

5. Verfahren nach einem der Ansprüche 1 bis 4, wobei der äquivalente Durchmesser des statischen Mischers 2-100 mm beträgt.

6. Verfahren nach einem der Ansprüche 1 bis 5, wobei die Länge des Reaktionsströmungswegs 3-100 m beträgt.

7. Verfahren nach einem der Ansprüche 1 bis 6, wobei die Anzahl an Strömungswegen, die mit einem Verbindungsabschnitt der Flüssigkeiten A und B verbunden sind und durch die die Flüssigkeit A strömt, und die Anzahl an Strömungswegen, die mit dem Verbindungsabschnitt der Flüssigkeiten A und B verbunden sind und durch die die Flüssigkeit B strömt, insgesamt 3-10 beträgt.

8. Verfahren nach einem der Ansprüche 1 bis 7, wobei mindestens eine organische Lithiumverbindung oder mindestens eine organische Magnesiumverbindung als der anionische Polymerisationsinitiator verwendet wird.

9. Verfahren nach einem der Ansprüche 1 bis 8, wobei n-Butyllithium als der anionische Polymerisationsinitiator verwendet wird.

10. Verfahren nach einem der Ansprüche 1 bis 9, wobei die Flüssigkeit B einen aromatischen Kohlenwasserstoff enthält.

## Revendications

1. Procédé de fabrication d'un polymère dans lequel une réaction de polymérisation anionique est effectuée par une réaction en flux continu, le procédé comprenant :
- introduire un liquide A contenant un monomère polymérisable anionique, un liquide B contenant un initiateur de polymérisation anionique, et un terminateur de polymérisation dans des voies d'écoulement différentes ;
- permettre aux liquides de s'écouler dans les voies d'écoulement ;
- permettre aux liquides A et B de se rejoindre ; soumettre le monomère polymérisable anionique à une polymérisation anionique pendant que les liquides ayant été joints s'écoulent vers l'aval dans une voie d'écoulement de réaction ;
- permettre à une solution, qui est obtenue par la réaction de polymérisation et s'écoule dans la voie d'écoulement de réaction, et au terminateur de polymérisation de se rejoindre afin de terminer la réaction de polymérisation et d'obtenir un polymère ayant un poids moléculaire moyen en nombre de 5 000 à 200 000,
dans lequel
- un mélangeur statique est disposé dans la voie d'écoulement de réaction, et un polymère ayant un poids moléculaire moyen en nombre ≥ 2 000 est introduit dans un port d'entrée du mélangeur statique,
- la température des liquides A et B est réglée de 0 °C à 40 °C, et la température de la solution de réaction de polymérisation obtenue par la jonction des liquides A et B s'écoulant dans la voie d'écoulement de réaction est réglée de-80 °C à-5 °C, et
- le rapport entre le débit A auquel le liquide A est introduit et le débit B auquel le liquide B est introduit [débit A]/[débit B] est réglé de (10/1) à (1,3/1).

2. Procédé selon la revendication 1, dans lequel un débit auquel le liquide B est introduit est > 10 à 2 000 mL/min.

3. Procédé selon la revendication 1 ou la revendication 2, dans lequel à la fois la voie d'écoulement à travers laquelle le liquide A s'écoule et la voie d'écoulement à travers laquelle le liquide B s'écoule ont un diamètre équivalent de 1 à 10 mm.

4. Procédé selon l'une quelconque des revendications 1 à 3, dans lequel le taux de conversion du monomère est ≥ 1,0 % au niveau du port d'entrée du mélangeur statique.

5. Procédé selon l'une quelconque des revendications 1 à 4, dans lequel le diamètre équivalent du mélangeur statique est de 2 à 100 mm.

6. Procédé selon l'une quelconque des revendications 1 à 5, dans lequel la longueur de la voie d'écoulement de réaction est de 3 à 100 m.

7. Procédé selon l'une quelconque des revendications 1 à 6, dans lequel le nombre de voies d'écoulement qui sont connectées à une partie de jonction des liquides A et B et à travers lesquelles le liquide A s'écoule et le nombre de voies d'écoulement qui sont connectées à la partie de jonction des liquides A et B et à travers lesquelles le liquide B s'écoule sont de 3 à 10 au total.

8. Procédé selon l'une quelconque des revendications 1 à 7, dans lequel au moins un composé organolithium ou au moins un composé organomagnésien est utilisé comme initiateur de polymérisation anionique.

9. Procédé selon l'une quelconque des revendications 1 à 8, dans lequel le n-butyllithium est utilisé comme initiateur de polymérisation anionique.

10. Procédé selon l'une quelconque des revendications 1 à 9, dans lequel le liquide B contient un hydrocarbure aromatique.
